# EUROPEAN PATENT APPLICATION

(11) **EP 1 420 501 A2**
(43) Date of publication of application: **19.05.2004**
(21) Application number: 03026309.9
(22) Date of filing: 17.11.2003
(51) Int. Cl.: H02K 1/27

(54) **Permanent magnet rotor and corresponding manufacturing method**

(30) Priority: 15.11.2002 DK 200201771
(71) Applicant: Bonus Energy A/S, 7330 Brande (DK)
(72) Inventor: Stiesdal, Henrik, 5000 Odense C. (DK); Rasmussen, Peter, 5700 Svendborg (DK)
(74) Representative: Nielsen, Leif

(57) **Abstract**

A rotor for motor or generator and comprising magnets and a method of mounting magnets in such rotor is described. The magnets are embedded in the rotor while maintaining the mounting position in a way quite similar to the mounting position of surface-mounted magnets.

Pos. 1 is the punched rotor plate with a central hole for the shaft. Pos. 2 is a hole stamped for the magnet. Three rows of magnets in each of the poles on an 8-pole machine, is disclosed. The sides of the magnet recesses are drawn as 2 mm, and the top, facing the air gap, as having a 3 mm thickness at the sides. Pos. 3 is a ventilation hole that forms a large air passage when the rotor is stacked. Pos. 4 is the area between the poles. Here we would need to place a non-magnetic non-conduction material if we used surface-mounting and bandaging. Now we can just leave it as air. It will serve to provide a large air passage through the air gap to improve cooling of both the rotor and the stator.

## Description

The present invention relates to a rotor for motor or generator and comprising magnets wherein the magnets are embedded in the rotor while maintaining the mounting position in a way quite similar to the mounting position of surface-mounted magnets and a method of manufacturing a rotor for motor or generator in such rotor comprising a step of embedding the magnets in the rotor while maintaining the mounting position in a way quite similar to the mounting position of surface-mounted magnets.

Concerning the practical rotor and cooling arrangements we have been looking further into these matters. We have thought of an alternative to surface mounting of the magnets that could bring in some benefits with regards to cooling in parallel to reducing the risks of surface mounting.

Surface-mounting of magnets on motor or generator rotors has the disadvantage that we need a bandage to keep the magnets in place when subject to the large centrifugal forces. The bandage increases the air gap (or, rather, the magnetic separation between rotor and stator) by several mm. Furthermore, it wraps the magnets in a material of low heat conduction. Finally, it is a technological challenge and adds costs.

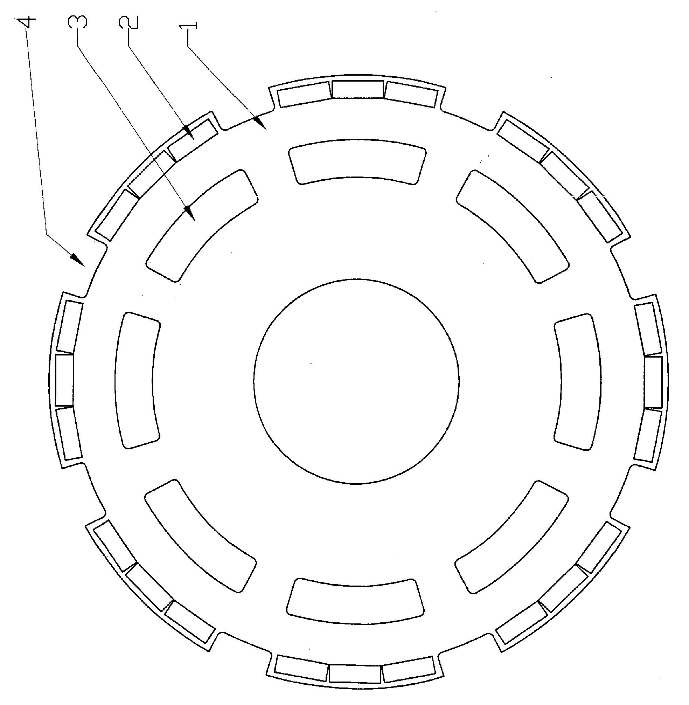

We have considered the possibility of embedding the magnets while maintaining the mounting position in a way quite similar to the mounting position of surface-mounted magnets. Please see the enclosed drawing.

According to the present invention a rotor of the type mentioned above is provided, which is characterised in that an air gap is provided in the area between the poles formed of the magnets for a large air passage to improve cooling of both the rotor and the stator.

The method according to the invention is characterised in a step placing the magnets leaving areas between the poles formed of the magnets thereby forming an air gap for a large air passage through the air gap to improve cooling of both the rotor and the stator.

The invention will now be explained with reference to the drawing illustrating a rotor plate for use together with corresponding rotor plates for manufacturing the rotor.

Pos. 1 is the punched rotor plate with a central hole for the shaft.

Pos. 2 is a hole stamped for the magnet. In this figure we operate with three rows of magnets in each of the poles on an 8-pole machine, but of course this has to be adjusted to the optimum magnet dimensions. The sides of the magnet recesses are drawn as 2 mm, and the top (facing the air gap) as having a 3 mm thickness at the sides.

Pos. 3 is a ventilation hole that forms a large air passage when the rotor is stacked.

Pos. 4 is the area/air gap between the poles. Here we would need to place a nonmagnetic non-conduction material if we used surface-mounting and bandaging. Now we can just leave it as air. It will serve to provide a large air passage through the air gap to improve cooling of both the rotor and the stator.

In a serial production the magnets are unmagnetised at mounting. They are stacked in the stamped holes and when completed all magnet holes are injected with a suitable resin to keep the magnets in place. The rotor is then magnetised pole by pole.
The rotor can be fitted with suitable end covers to prevent axial migration of magnets in case of failure of the resin.

With a simple low-pressure centrifugal fan at one end a strong air flow through the ventilation passages can be ensured.

The magnets will loose a bit of their field due to short-circuiting through the iron edges of the stamped holes. However, by keeping the thickness low (2 mm) we loose only about 10% of the field, which is compensated by using 10% ore magnets. The additional cost is more than adequately offset by the reduced costs and risks of surface mounting and bandaging. Furthermore, the eddy-current losses in the magnets are now much reduced.

## Claims

1. Rotor for motor or generator and comprising magnets wherein the magnets are embedded in the rotor while maintaining the mounting position in a way quite similar to the mounting position of surface-mounted magnets **characterised in that** an air gap is provided in the area between the poles formed of the magnets for a large air passage to improve cooling of both the rotor and the stator.

2. Rotor according to claim 1 **characterised in that** the rotor comprises a punched rotor plate with a central hole for a shaft and holes stamped for the magnets.

3. Rotor according to any of the preceding claims **characterised in that** the sides of the magnet recesses have less material thickness than the top of the magnet recesses facing the air gap.

4. Rotor according to any of the preceding claims **characterised in that** an air gap extending over the length of the rotor is provided on a position inwardly of the position of the magnets to improve cooling of the rotor.

5. Method of manufacturing a rotor for motor or generator according to any of claims 1-4 comprising a step of embedding the magnets in the rotor while maintaining the mounting position in a way quite similar to the mounting position of surface-mounted magnets **characterised in** a step placing the magnets leaving areas between the poles formed of the magnets thereby forming an air gap for a large air passage through the air gap to improve cooling of both the rotor and the stator.

6. Method according to claim 5 **characterised in** astep of punching a rotor plate with a central hole for the shaft and stamping holes for the magnets and stamping of ventilation holes that forms a large air passage when rotor is stacked.

7. Method according to claim 5 or 6 **characterised in that** the magnets are unmagnetised at mounting, stacked in the stamped holes, and fixed by suitable means e.g. by injection of resin in all magnet holes to keep the magnets in place.

8. Method according to claim 7 **characterised in that** the rotor is magnetised pole by pole following the injection of resin.
